# DEMANDE DE BREVET EUROPEEN

(11) **EP 4 451 528 A1**
(43) Date de publication de la demande: **23.10.2024**
(21) Numéro de dépôt: 23315092.9
(22) Date de dépôt: 21.04.2023
(51) Int. Cl.: H02K 17/16

(54) **ROTOR À CAGE D'ÉCUREUIL ET MACHINE ÉLECTRIQUE ASYNCHRONE COMPRENANT UN TEL ROTOR**

(71) Demandeur: ALSTOM Holdings, 93400 Saint-Ouen-sur-Seine (FR)
(72) Inventeur: Souille, M. Ronan, 25220 THISE (FR); Balandret, Mme Coralie, 25480 MISEREY-SALINES (FR); Boualem, M. Benali, 25660 SAONE (FR)
(74) Mandataire: Lavoix

(57) **Abrégé**

Le rotor (4) de machine asynchrone comprend un arbre (6) s'étendant suivant un axe de rotor (A), un noyau (8) ferromagnétique monté sur l'arbre (6), une cage d'écureuil (10) comprenant une premier anneau (16A) et un deuxième anneau (16B) disposés axialement de part et d'autre du noyau (8) et des barres (18) reliant le premier anneau (16A) et le deuxième anneau (16B) en s'étendant via des passages (14) ménagés dans le noyau (8). Le diamètre externe (DA1, DA2) d'un ou de chacun parmi le premier anneau (16A) et le deuxième anneau (16B) est strictement inférieur au diamètre (DC) d'un cylindre imaginaire circonscrit du noyau ferromagnétique (8) centré sur l'axe de rotor (A).

## Description

La présente invention concerne le domaine des machines électriques asynchrones, et en particulier un rotor à cage d'écureuil pour une machine électrique asynchrone.

Une machine électrique asynchrone est susceptible d'être utilisée comme un moteur pour générer de l'énergie mécanique en utilisant de l'énergie électrique ou comme un générateur pour générer de l'énergie électrique en utilisant de l'énergie mécanique.

Une machine électrique asynchrone possède un stator et un rotor monté rotatif par rapport au stator. Le rotor comprend par exemple un arbre, un noyau ferromagnétique monté sur l'arbre, le noyau étant stratifié et formé d'un empilement axial de plaques métalliques enfilées sur l'arbre, et une cage d'écureuil métallique comprenant deux anneaux disposés axialement de part et d'autre du noyau et des barres s'étendant axialement entre les deux anneaux via des passages traversant le noyau.

Les plaques du noyau sont par exemple réalisées en acier. L'anneau et les barres de la cage d'écureuil sont par exemple réalisés en aluminium ou en alliage de cuivre.

En cours de fonctionnement, la cage d'écureuil est fortement sollicitée mécaniquement, notamment du fait de la force centrifuge, et en particulier dans le cas de vitesses de rotation élevées.

Les liaisons entre les barres et chacun des deux anneaux de la cage d'écureuil sont conçues et fabriquées pour supporter des contraintes mécaniques élevées pour limiter tout risque de casse.

Il existe néanmoins un risque de casse de la cage d'écureuil, ce qui limite la fiabilité du rotor.

Il est possible de renforcer chaque anneau de la cage d'écureuil en montant une frette autour de l'anneau pour éviter une casse de l'anneau. La frette est une bague emmanchée sur l'anneau avec un ajustement serré. La frette est par exemple réalisée en acier ou en alliage de cuivre. La frette est par exemple montée en force sur l'anneau et/ou en créant une dilatation thermique différentielle entre la frette et l'anneau.

Néanmoins, la solution consistant à ajouter une frette sur un anneau d'une cage d'écureuil est très coûteuse, notamment du fait des difficultés de montage.

Un des buts de l'invention est de proposer un rotor de machine électrique asynchrone qui soit fiable et dont le coût de réalisation soit limité.

A cet effet, l'invention propose un rotor de machine électrique asynchrone, le rotor comprenant un arbre s'étendant suivant un axe de rotor, un noyau ferromagnétique monté sur l'arbre, une cage d'écureuil comprenant une premier anneau et un deuxième anneau disposés axialement de part et d'autre du noyau et des barres reliant le premier anneau et le deuxième anneau en s'étendant via des passages ménagés dans le noyau, dans lequel le diamètre externe d'un ou de chacun parmi le-premier anneau et le deuxième anneau est strictement inférieur au diamètre d'un cylindre imaginaire circonscrit du noyau ferromagnétique centré sur l'axe de rotor.

Un anneau de cage d'écureuil présentant un diamètre externe limité, strictement inférieur au diamètre du cylindre imaginaire circonscrit au noyau ferromagnétique de la cage d'écureuil, permet de limiter la force centrifuge subie par l'anneau lors de la rotation du rotor et de limiter les contraintes apparaissant dans les liaisons entre les barres et l'anneau. Ceci limite donc le risque de casse de la cage d'écureuil, sans nécessiter le recours au renforcement de l'anneau par l'ajout d'une frette rapportée sur l'anneau.

Selon des exemples de réalisation particuliers, le rotor comprend une ou plusieurs des caractéristiques optionnelles suivantes, prises individuellement ou selon toutes les combinaisons techniquement possibles :
- le rapport du diamètre du cylindre imaginaire circonscrit du noyau ferromagnétique sur le diamètre externe d'un ou de chacun parmi le premier anneau et le deuxième anneau est comprise entre 1,1 et 2 ;
- un ou chacun parmi un diamètre du cercle imaginaire circonscrit de premières extrémités des barres liées au premier anneau et un diamètre du cercle imaginaire circonscrit de deuxièmes extrémités des barres liées au deuxième anneau est strictement inférieur au diamètre du cylindre imaginaire circonscrit du noyau ferromagnétique ;
- un tronçon d'extrémité ou chaque tronçon d'extrémité d'au moins une barre ou de chaque barre s'étend vers l'extrémité correspondante de la barre en se rapprochant radialement de l'axe de rotor, et en particulier est plié de manière à se rapprocher radialement de l'axe du rotor ;
- un tronçon d'extrémité ou chaque tronçon d'extrémité d'au moins une barre ou de chaque barre présente une épaisseur radiale strictement inférieure à celle d'un tronçon intermédiaire de la barre ;
- un tronçon d'extrémité ou chaque tronçon d'extrémité d'au moins une barre ou de chaque barre présente une épaisseur radiale qui diminue progressivement en direction d'une extrémité correspondante de la barre ;
- un ou chacun parmi le premier anneau et le deuxième anneau est réalisé en cuivre ou en aluminium et/ou au moins une ou chaque barre est réalisée en cuivre ou en aluminium ;
- la cage d'écureuil est dépourvue de frette autour d'un ou de chacun parmi le premier anneau et le deuxième anneau ;
- un tronçon intermédiaire d'au moins une ou de chaque barre possède une section transversale ayant une première portion de profil et une deuxième portion de profil différentes, la deuxième portion de profil étant plus éloignée de l'axe de rotor que la première portion de profil ;
- un ou chacun parmi un premier tronçon d'extrémité et un deuxième tronçon d'extrémité d'au moins une ou chaque barre présente à sa jonction avec le premier anneau ou le deuxième anneau une section transversale correspondant à la première portion de profil ;
- la première portion de profil est ronde et/ou la deuxième portion de profil est en queue d'aronde ;
- le rotor comprend au moins un élément de retenue, chaque élément de retenue étant associé à un parmi le premier anneau et le deuxième anneau et comprenant une bague de retenue entourant ledit anneau associé et un support, de préférence en forme de disque, par l'intermédiaire duquel la bague de retenue est montée sur l'arbre ;
- la bague de retenue de chaque élément de retenue est réalisé en acier, le support de chaque élément de retenue est réalisé en acier et/ou la bague de retenue et le support de chaque élément de retenue sont réalisés en une seule pièce de même matière.

L'invention concerne aussi une machine électrique asynchrone comprenant un rotor tel que défini ci-dessus.

L'invention et ses avantages seront mieux compris à la lecture de la description qui va suivre, donnée uniquement à titre d'exemple non limitatif, et faite en référence aux dessins annexés, sur lesquels :
- la Figure 1 est une vue en coupe axiale d'un rotor de machine électrique asynchrone selon un exemple de réalisation ;
- la Figure 2 est une vue en coupe axiale d'un rotor de machine électrique asynchrone selon un autre exemple de réalisation ;
- la Figure 3 est une vue en coupe axiale d'un rotor de machine électrique asynchrone selon un autre exemple de réalisation ;
- la Figure 4 est une vue en coupe transversale d'une barre d'une cage d'écureuil du rotor de la Figure 2 ou de la Figure 3.

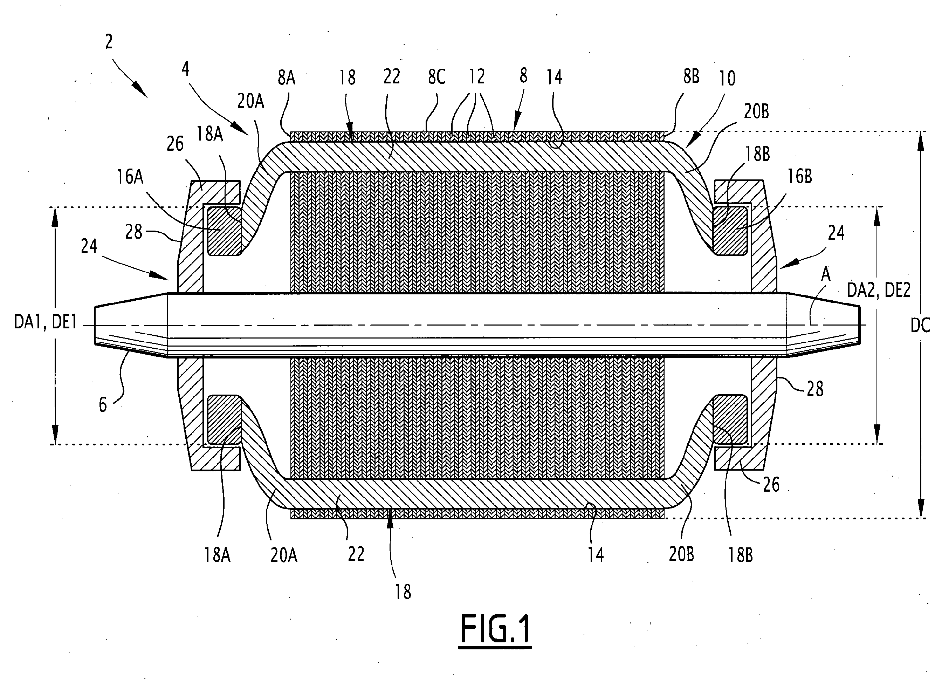

Sur la Figure 1, une machine électrique asynchrone 2 comporte un rotor 4 comprenant un arbre 6, un noyau 8 ferromagnétique monté sur l'arbre 6, et une cage 10 généralement nommée « cage d'écureuil ».

L'arbre 6 s'étend suivant un axe de rotor A. L'arbre 6 est destiné à être monté rotatif autour de l'axe de rotor A par l'intermédiaire de paliers (non représentés) disposés par exemple à proximité des deux extrémités axiales de l'arbre 6.

Le noyau 8 présente de préférence une forme générale cylindrique de section transversale circulaire centrée sur l'axe de rotor A.

Le noyau 8 présente une première face d'extrémité 8A et une deuxième face d'extrémité 8B opposées situées aux extrémités axiales du noyau 8, et une face latérale 8C s'étendant axialement entre la première face d'extrémité 8A et la deuxième face d'extrémité 8B.

De préférence, chacune de la première face d'extrémité 8A et de la deuxième face d'extrémité 8B est perpendiculaire à l'axe de rotor A et/ou la face latérale 8C est de préférence cylindrique de section transversale circulaire centrée sur l'axe de rotor A.

Le noyau 8 est configuré pour conduire un champ électromagnétique. Le noyau 8 est de préférence réalisé au moins en partie en un matériau ferromagnétique, en particulier en acier.

Le noyau 8 est avantageusement stratifié. Le noyau 8 est par exemple formé d'un empilement axial de plaques 12 enfilées sur l'arbre 6. Les plaques 12 sont empilées axialement suivant l'axe de rotor A. Chaque plaque 12 présente de préférence la forme d'un disque perpendiculaire à l'axe de rotor A.

Chaque plaque 12 est de préférence réalisée en matériau ferromagnétique, en particulier en acier.

Le noyau 8 stratifié permet de limiter la circulation axiale de courants électriques induits dans le noyau 8 lors du fonctionnement de la machine électrique asynchrone 2.

De préférence, les plaques 12 du noyau 8 sont séparées par des couches intermédiaires (non représentées) réalisées en matériau isolant électriquement. Le noyau 8 est alors un empilement alterné de plaques 12 conductrices et de couches intermédiaires isolantes.

Le noyau 8 possède une pluralité de passages 14 traversant le noyau 8. Chaque passage 14 s'étendant de la première face d'extrémité 8A à la deuxième face d'extrémité 8B du noyau 8. Chaque passage 14 débouche sur la première face d'extrémité 8A et sur la deuxième face d'extrémité 8B.

Les passages 14 sont de préférence parallèles entre eux. Chaque passage 14 s'étend par exemple parallèlement à l'axe de rotor A.

Chaque passage 14 est de préférence situé radialement à proximité de la périphérie du noyau 8, i.e. à proximité de la face latérale 8C du noyau 8.

De préférences, les passages 14 sont radialement équidistants de l'axe de rotor A et répartis circonférentiellement autour de l'axe de rotor A, en particulier de manière uniforme.

La cage d'écureuil 10 comprend un premier anneau 16A et un deuxième anneau 16B, disposés axialement de part et d'autre du noyau 8, et une pluralité de barres 18 reliant le premier anneau 16A et le deuxième anneau 16B en traversant le noyau 8 via les passages 14.

Chacun du premier anneau 16A et du deuxième anneau 16B est centré sur l'axe de rotor A et possède de préférence une forme circulaire centrée sur l'axe de rotor A.

Chaque barre 18 s'étend du premier anneau 16A au deuxième anneau 16B à travers un passage 14 respectif. De préférence, chaque passage 14 reçoit une seule barre 18.

Les barres 18 sont de préférence parallèles entre elles. Chaque barre 18 s'étend de préférence parallèlement à l'axe de rotor A.

De préférence, les barres 18 sont radialement équidistantes de l'axe de rotor A et réparties circonférentiellement autour de l'axe de rotor A, en particulier de manière uniforme.

Le premier anneau 16A, le deuxième anneau 16B et les barres 18 sont réalisés en matériaux conducteurs d'électricité, de préférence en métal.

Chacun du premier anneau 16A et du deuxième anneau 16B est par exemple réalisé en cuivre ou en aluminium. Le premier anneau 16A et le deuxième anneau 16B sont de préférence réalisés dans le même matériau.

Chaque barre 18 est par exemple réalisée en cuivre ou en aluminium. Toutes les barres 18 sont de préférence réalisées dans le même matériau.

Chaque barre 18 possède une première extrémité 18A liée rigidement au premier anneau 16A et une deuxième extrémité 18B liée rigidement au deuxième anneau 16B.

Dans un exemple, la première extrémité 18A de chaque barre 18 est liée rigidement au premier anneau 16A par emboîtement de formes complémentaires et/ou par soudage, en particulier par brasage, et/ou la deuxième extrémité 18B de chaque barre 18 est liée rigidement au deuxième anneau 16B par exemple par emboîtement de formes complémentaires et/ou par soudage, en particulier par brasage.

De préférence, la première extrémité 18A de chaque barre 18 est aboutée contre une face du premier anneau 16A tournée vers la première face d'extrémité 8A du noyau 8 et/ou la deuxième extrémité 18B de chaque barre 18 est de préférence aboutée contre une face du deuxième anneau 16B tournée vers la deuxième face d'extrémité 8B du noyau 8.

Chaque barre 18 possède, entre sa première extrémité 18A et sa deuxième extrémité 18B, un premier tronçon d'extrémité 20A, un tronçon intermédiaire 22 et un deuxième tronçon d'extrémité 20B.

Le premier tronçon d'extrémité 20A est terminé par la première extrémité 18A et le deuxième tronçon d'extrémité 20B est terminé par la deuxième extrémité 18B. Le tronçon intermédiaire 22 s'étend entre le premier tronçon d'extrémité 20A et le deuxième tronçon d'extrémité 20B.

De préférence, le tronçon intermédiaire 22 d'une ou de chaque barre 18 est profilé. Il présente une section transversale constante le long de la barre 18.

Le tronçon intermédiaire 22 de chaque barre 18 s'étend au travers du noyau 8. Le tronçon intermédiaire 22 de chaque barre 18 est reçu dans le passage 14 correspondant du noyau 8.

De préférence, le premier tronçon d'extrémité 20A de chaque barre 18 fait saillie du noyau 8, en particulier de la première face d'extrémité 8A du noyau 8, et/ou le deuxième tronçon d'extrémité 20B de chaque barre 18 fait saillie du noyau 8, en particulier de la deuxième face d'extrémité 8B du noyau 8.

De préférence, les passages 14 sont identiques entre eux et/ou les barres 18 sont identiques entre elles.

Le rotor 16 présente par exemple une symétrie de rotation d'ordre N, N étant un entier égal à 2 ou plus. Le rotor 16 est alors invariant par rotation autour de l'axe de rotor A d'un angle 2π/N.

Avantageusement, le rotor 16 comprend un élément de retenue 24 associé à un du premier anneau 16A et du deuxième anneau 16B, et de préférence un élément de retenue 26 respectif associé à chacun du premier anneau 16A et du deuxième anneau 16B.

Chaque élément de retenue 24 comprend une bague de retenue 26 centrée sur l'axe de rotor A et entourant l'anneau associé (le premier anneau 16A ou le deuxième anneau 16B) et un support de montage 28 par l'intermédiaire duquel la bague de retenue 26 est montée sur l'arbre 6.

Chaque élément de retenue 24 est de préférence solidaire en rotation de l'arbre 6 et de préférence fixé rigidement sur l'arbre 6.

Le support de montage 28 d'un ou de chaque élément de retenue 24 est par exemple monté sur l'arbre 6. Le support de montage 28 d'un ou de chaque élément de retenue 24 est par exemple un disque, en particulier un disque plein ou un disque ajouré.

De préférence, la bague de retenue 26 d'un ou de chaque élément de retenue 24 entoure l'anneau associé (le premier anneau 16A ou le deuxième anneau 16B) avec un jeu radial non nul entre la bague de retenue 26 et l'anneau associé.

De préférence, la cage d'écureuil 10 est dépourvue de frette sur un ou chacun parmi le premier anneau 16A et le deuxième anneau 16B.

Chaque élément de retenue 24 permet de retenir l'anneau associé (le premier anneau 16A et le deuxième anneau 16B) en cas de rupture de l'anneau associé ou de séparation de l'anneau associé et des barres 18, par exemple du fait d'une rupture des liaisons entre l'anneau associé et les barres 18. La bague de retenue 26 de chaque élément de retenue 24 ne constitue pas un renfort ou une frette, mais sert à retenir l'anneau associé (le premier anneau 16A ou le deuxième anneau 16B) en cas de rupture dudit anneau associé.

Le noyau ferromagnétique 8 est circonscrit par un cylindre imaginaire circonscrit centré sur l'axe de rotor A et présentant un diamètre de cylindre circonscrit DC.

Le cylindre imaginaire circonscrit du noyau ferromagnétique 8 est le cylindre imaginaire de plus petit diamètre centré sur l'axe de rotor A et circonscrivant le noyau ferromagnétique 8 .

Le premier anneau 16A et le deuxième anneau 16B présentent chacun un diamètre externe correspondant au diamètre du plus petit cylindre centré sur l'axe de rotor A et circonscrivant l'anneau en question.

Le premier anneau 16A présente un premier diamètre externe DA1 et le deuxième anneau 16B présente un deuxième diamètre externe DA2.

Le diamètre externe d'un ou de chacun parmi le premier anneau 16A et le deuxième anneau 16B est strictement inférieur au diamètre du cylindre imaginaire circonscrit du noyau ferromagnétique 8.

En d'autres termes, le premier diamètre externe DA1 est strictement inférieur au diamètre de cylindre circonscrit DC du cylindre imaginaire circonscrit du noyau ferromagnétique 8 et/ou le deuxième diamètre externe DA2 est strictement inférieur au diamètre de cylindre circonscrit DC du cylindre imaginaire circonscrit du noyau ferromagnétique 8.

De préférence, le rapport du diamètre du cylindre imaginaire circonscrit du noyau ferromagnétique 8 (le diamètre de cylindre circonscrit DC) sur le diamètre externe d'un ou de chacun parmi le premier anneau 16A et le deuxième anneau 16B est comprise entre 1,1 et 2.

En d'autres termes, le rapport du diamètre de cylindre circonscrit DC sur le premier diamètre externe DA1 est compris entre 1,1 et 2 et/ou le rapport du diamètre de cylindre circonscrit DC sur le deuxième diamètre externe DA2 est compris 1,1 et 2.

De préférence, le premier diamètre externe DA1 et le deuxième diamètre externe DA2 sont égaux.

Les premières extrémité 18A des barres 18 sont circonscrites par un premier cercle imaginaire circonscrit centré sur l'axe de rotor A et possédant un premier diamètre de cercle circonscrit DE1 et les deuxième extrémités 18B des barres 18 sont circonscrites par un deuxième cercle imaginaire circonscrit centré sur l'axe de rotor A et possédant un deuxième diamètre de cercle circonscrit DE2.

De préférence, le diamètre du cercle imaginaire circonscrit des premières extrémités 18A des barres 18 (le premier diamètre de cercle circonscrit DE1) est strictement inférieur au diamètre DC du cylindre imaginaire circonscrit du noyau ferromagnétique 8 (le diamètre de cylindre circonscrit DC) et/ou le diamètre du cercle imaginaire circonscrit des deuxièmes extrémités 18B des barres 18 (i.e. le deuxième diamètre de cercle circonscrit DE2) est strictement inférieur au diamètre du cylindre imaginaire circonscrit du noyau ferromagnétique 8 (le diamètre de cylindre circonscrit DC).

De préférence, le rapport du diamètre de cylindre circonscrit DC sur le premier diamètre de cercle circonscrit DE1 est compris entre 1,1 et 2 et/ou le rapport du diamètre de cylindre circonscrit DC sur le deuxième diamètre de cercle circonscrit DE2 est compris entre 1,1 et 2.

Dans un exemple de réalisation, comme illustré sur la Figure 1, le diamètre du cercle imaginaire circonscrit des premières extrémités 18A des barres 18 (le premier diamètre de cercle circonscrit DE1) est égal au diamètre externe du premier anneau 16A (le premier diamètre externe DA1) et/ou le diamètre du cercle imaginaire circonscrit des deuxième extrémités 18B des barres 18 (le deuxième diamètre de cercle circonscrit DE2) est égal au diamètre externe du deuxième anneau 16B (le deuxième diamètre externe DA2).

Selon les cas, les premiers tronçons d'extrémité 18A sont configurés pour une fixation des premières extrémités 18A au premier anneau 16A présentant un premier diamètre externe DA1 strictement inférieur au diamètre de cylindre circonscrit DC et/ou les deuxièmes tronçons d'extrémité 18B sont configurés pour une fixation des deuxièmes extrémités 18B au deuxième anneau 16B présentant un deuxième diamètre externe DA2 strictement inférieur au diamètre de cylindre circonscrit DC.

Dans un exemple, un tronçon d'extrémité ou chaque tronçon d'extrémité d'au moins une barre 18 ou de chaque barre 18 s'étend vers l'extrémité correspondante de la barre 18 en se rapprochant radialement de l'axe de rotor A, et en particulier est plié de manière à se rapprocher radialement de l'axe du rotor A.

En particulier, le premier tronçon d'extrémité 18A d'une ou de chaque barre 18 est configuré de telle manière que la première extrémité 18A de la barre 18 est radialement plus proche de l'axe de rotor A que le tronçon intermédiaire 22 et/ou le deuxième tronçon d'extrémité 18B d'une ou de chaque barre 18 est configuré de telle manière que la deuxième extrémité 18B de la barre 18 est radialement plus proche de l'axe de rotor A que le tronçon intermédiaire 22.

Dans un exemple, comme illustré sur la Figure 1, le premier tronçon d'extrémité 18A d'une ou de chaque barre 18 s'étend entre le tronçon intermédiaire 22 et la première extrémité 18A en se rapprochant de l'axe de rotor A.

En particulier, le premier tronçon d'extrémité 20A d'une ou de chaque barre 18 est plié de manière à s'étendre entre le tronçon intermédiaire 22 et la première extrémité 18A en se rapprochant de l'axe de rotor A.

Le premier tronçon d'extrémité 20A d'une ou de chaque barre 18 est par exemple plié de manière à présenter deux points d'inflexion de manière à s'étendre axialement à partir du tronçon intermédiaire 22, à se rapprocher de l'axe de rotor A, puis à rejoindre le premier anneau 16A axialement.

Dans un exemple, comme illustré sur la Figure 1, le deuxième tronçon d'extrémité 18B d'une ou de chaque barre 18 s'étend entre le tronçon intermédiaire 22 et la deuxième extrémité 18B en se rapprochant de l'axe de rotor A.

En particulier, le deuxième tronçon d'extrémité 20B d'une ou de chaque barre 18 est plié de manière à s'étendre entre le tronçon intermédiaire 22 et la deuxième extrémité 18B en se rapprochant de l'axe de rotor A.

Le deuxième tronçon d'extrémité 20B d'une ou de chaque barre 18 est par exemple plié de manière à présenter deux points d'inflexion de manière à s'étendre axialement à partir du tronçon intermédiaire 22, à se rapprocher de l'axe de rotor A, puis à rejoindre le deuxième anneau 16B axialement.

Une ou chaque barre 18 présente par exemple un profil constant le long du tronçon intermédiaire 22 et des tronçons d'extrémité 20.

Selon un procédé de fabrication, les barres 18 sont initialement rectilignes et un ou chacun parmi le premier tronçon d'extrémité 20A et le deuxième tronçon d'extrémité 20B de la barre 18 est plié après insertion des barres 18 dans les passages 14.

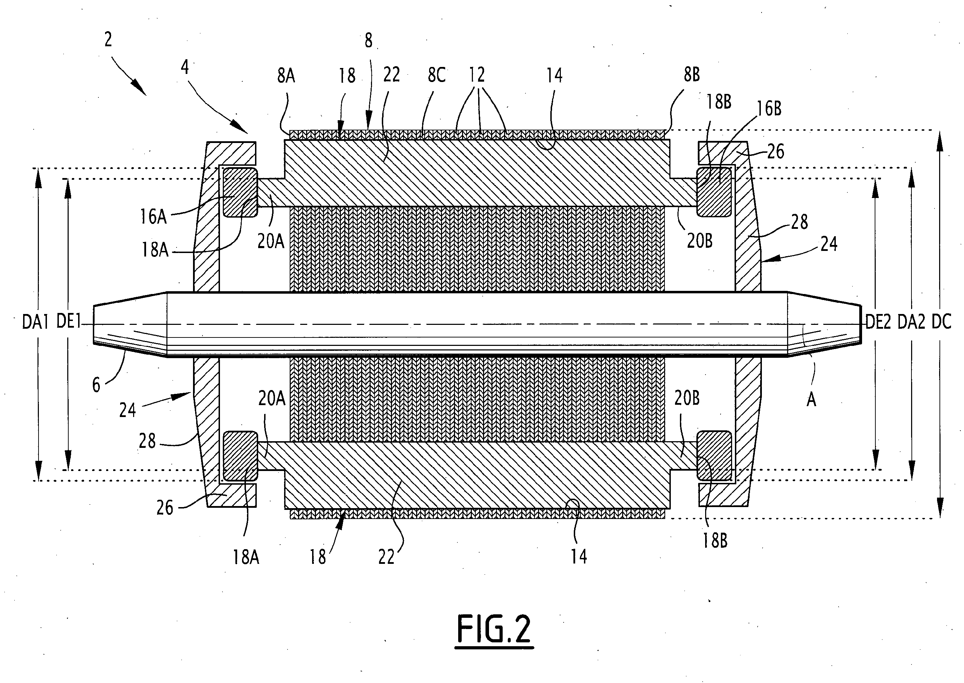

Dans un exemple, comme illustré sur la Figures 2, un tronçon d'extrémité ou chaque tronçon d'extrémité d'au moins une barre 18 ou de chaque barre 18 présente une épaisseur radiale strictement inférieure à celle d'un tronçon intermédiaire 22 de la barre 18.

Un ou chaque tronçon d'extrémité d'un barre 18 ou de chaque barre 18 est par exemple profilé avec un profil différent de celui du tronçon intermédiaire 22 de la barre 18, la barre 18 possédant un épaulement à la jonction entre le tronçon intermédiaire 22 et le tronçon d'extrémité 20.

Dans un exemple, le premier tronçon d'extrémité 20A d'une ou de chaque barre 18 présente une épaisseur radiale strictement inférieure à celle du tronçon intermédiaire 22 de la barre 18.

Le premier tronçon d'extrémité 20A et le tronçon intermédiaire 22 sont par exemple profilés avec des profils différents. La barre 18 possède un épaulement à la jonction entre le tronçon intermédiaire 22 et le premier tronçon d'extrémité 20A.

Dans un exemple, le deuxième tronçon d'extrémité 20B d'une ou de chaque barre 18 présente une épaisseur radiale strictement inférieure à celle du tronçon intermédiaire 22 de la barre 18.

Le deuxième tronçon d'extrémité 20B et le tronçon intermédiaire 22 sont par exemple profilés avec des profils différents. La barre 18 possède un épaulement à la jonction entre le tronçon intermédiaire 22 et le deuxième tronçon d'extrémité 20B.

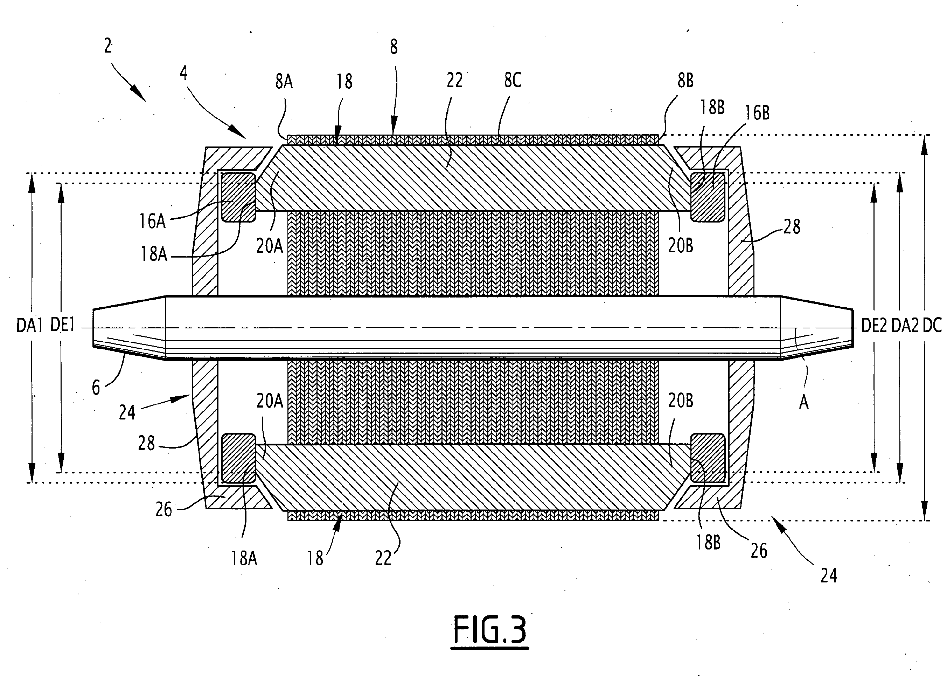

Dans un exemple, comme illustré sur la Figure 3, un tronçon d'extrémité ou chaque tronçon d'extrémité d'au moins une barre 18 ou de chaque barre 18 présente une épaisseur radiale qui diminue progressivement en direction d'une extrémité correspondante de la barre 18.

Dans un exemple, le premier tronçon d'extrémité 20A d'une ou de chaque barre 18 présente une épaisseur radiale qui diminue progressivement en direction de la première extrémité 18A de la barre 18 (i.e. du tronçon intermédiaire 22 vers le premier anneau 16A) et/ou le deuxième tronçon d'extrémité 20B d'une ou de chaque barre 18 présente une épaisseur radiale qui diminue progressivement en direction de la deuxième extrémité 18B de la barre 18 (i.e. du tronçon intermédiaire 22 vers le deuxième anneau 16B).

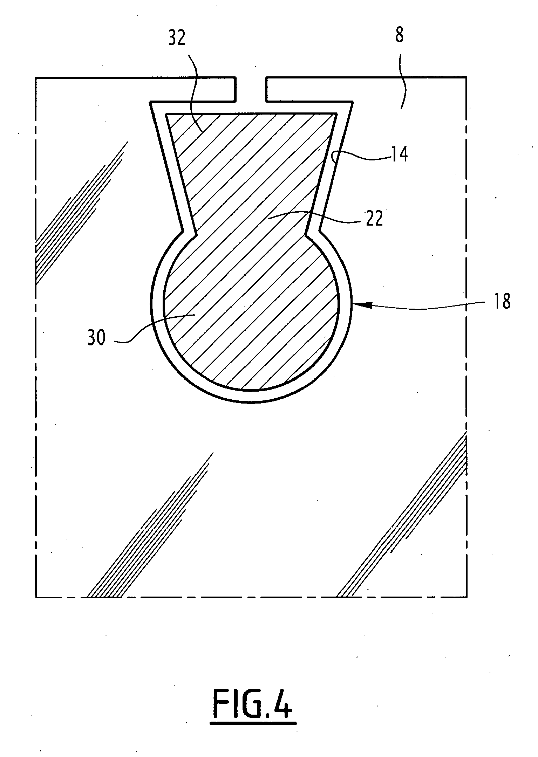

Comme illustré sur la Figure 4, dans un exemple de réalisation, le tronçon intermédiaire 22 profilé d'au moins une ou de chaque barre 18 possède une section transversale ayant une première portion de profil 30 et une deuxième portion de profil 32, la première portion de profil 30 étant plus proche de l'axe de rotor A que la deuxième portion de profil 32.

Dans un exemple, la première portion de profil 30 est par exemple ronde et/ou la deuxième portion de profil 32 s'élargit radialement vers l'extérieur. La deuxième portion de profil 32 est par exemple en queue d'aronde s'élargissant radialement vers l'extérieur.

Lorsqu'un tronçon d'extrémité 20 de la barre 18 présente un profil différent de celui du tronçon intermédiaire 22, comme dans l'exemple de la Figure 2, le tronçon d'extrémité 20 présente par exemple un profil correspondant à la première portion de profil du tronçon intermédiaire 22.

Lorsqu'un tronçon d'extrémité 20 de la barre 18 présente une dimension radiale diminuant en direction de l'anneau 16 correspondant, comme l'exemple de la Figure 3, le tronçon d'extrémité 20 présente par exemple une section transversale évolutive évoluant du profil du tronçon intermédiaire 22 à un profil correspondant à la première portion de profil du tronçon intermédiaire 22.

Ceci permet de prévoir un tronçon intermédiaire 22 avec un profil favorisant le bon fonctionnement de la machine asynchrone tout en prévoyant un tronçon d'extrémité 20 favorisant une liaison fiable avec l'anneau 16 correspondant.

La machine électrique asynchrone 2 est utilisée comme moteur, en particulier comme moteur de traction, ou comme générateur. La machine électrique asynchrone 2 est utilisée par exemple dans un véhicule, en particulier un véhicule ferroviaire.

Grâce à l'invention, il est possible d'obtenir un rotor 4 à cage d'écureuil 10 dont le risque de casse est limité et la fiabilité améliorée. Il est possible d'utiliser la machine électrique asynchrone 2 avec des vitesses de rotation du rotor 4 élevées.

En outre, la prévision d'un élément de retenue 26 permet de limiter les dégâts, en particulier les dégâts d'un stator de la machine électrique asynchrone 2 en cas de rupture de la cage d'écureuil 10.

Ceci est obtenu avec un coût de production limité par rapport à la solution consistant à monter une frette sur les anneaux 16 de la cage d'écureuil 10.

L'invention n'est pas limitée aux exemples de réalisation et aux variantes indiqués ci-dessus, d'autres exemples de réalisation et d'autres variantes étant envisageables.

De préférences, comme illustré sur les Figures 1 à 3, les premiers tronçons d'extrémité 18A et les deuxièmes tronçons d'extrémités 18B des barres présentent des formes analogues.

En particulier, le rotor 4 présente de préférence une symétrie par rapport à un plan transversal médian P perpendiculaire à l'axe de rotor A.

Ceci étant, il est possible de mixer différentes formes de tronçons d'extrémité, en prévoyant par exemple des barres 18 possédant des premiers tronçons d'extrémité 18A conforme à un exemple selon un parmi les exemples illustrés sur les Figures 1 à 3 et des deuxièmes tronçons d'extrémité 18B conforme à un exemple selon un autre parmi les exemples illustrés sur les Figures 1 à 3.

## Revendications

1. Rotor (4) de machine électrique asynchrone (2), le rotor (4) comprenant un arbre (6) s'étendant suivant un axe de rotor (A), un noyau (8) ferromagnétique monté sur l'arbre (6), une cage d'écureuil (10) comprenant une premier anneau (16A) et un deuxième anneau (16B) disposés axialement de part et d'autre du noyau (8) et des barres (18) reliant le premier anneau (16A) et le deuxième anneau (16B) en s'étendant via des passages (14) ménagés dans le noyau (8), dans lequel le diamètre externe (DA1, DA2) d'un ou de chacun parmi le premier anneau (16A) et le deuxième anneau (16B) est strictement inférieur au diamètre (DC) d'un cylindre imaginaire circonscrit du noyau ferromagnétique (8) centré sur l'axe de rotor (A).

2. Rotor (4) selon la revendication 1, dans lequel le rapport du diamètre (DC) du cylindre imaginaire circonscrit du noyau ferromagnétique (8) sur le diamètre externe (DA1, DA2) d'un ou de chacun parmi le premier anneau (16A) et le deuxième anneau (16B) est comprise entre 1,1 et 2.

3. Rotor (4) selon la revendication 1 ou la revendication 2, dans lequel, un ou chacun parmi un diamètre (DE1) du cercle imaginaire circonscrit de premières extrémités (18A) des barres (18) liées au premier anneau (16A) et un diamètre (DE2) du cercle imaginaire circonscrit de deuxièmes extrémités (18B) des barres liées au deuxième anneau (16B) est strictement inférieur au diamètre (DC) du cylindre imaginaire circonscrit du noyau ferromagnétique (8).

4. Rotor (4) selon l'une quelconque des revendications précédentes, un tronçon d'extrémité (20A, 20B) ou chaque tronçon d'extrémité (20A, 20B) d'au moins une barre (18) ou de chaque barre'(18) s'étend vers l'extrémité correspondante de la barre (18) en se rapprochant radialement de l'axe de rotor (A), et en particulier est plié de manière à se rapprocher radialement de l'axe du rotor (A).

5. Rotor (4) selon l'une quelconque des revendications précédentes, dans lequel un tronçon d'extrémité (20A, 20B) ou chaque tronçon d'extrémité (20A, 20B) d'au moins une barre (18) ou de chaque barre (18) présente une épaisseur radiale strictement inférieure à celle d'un tronçon intermédiaire (22) de la barre (18).

6. Rotor (4) selon l'une quelconque des revendications précédentes, dans lequel un tronçon d'extrémité (20A, 20B) ou chaque tronçon d'extrémité (20A, 20B) d'au moins une barre (18) ou de chaque barre (18) présente une épaisseur radiale qui diminue progressivement en direction d'une extrémité (18A, 18B) correspondante de la barre (18).

7. Rotor (4) selon l'une quelconque des revendications précédentes, dans lequel un ou chacun parmi le premier anneau (16A) et le deuxième anneau (16B) est réalisé en cuivre ou en aluminium et/ou au moins une ou chaque barre (18) est réalisée en cuivre ou en aluminium.

8. Rotor (4) selon l'une quelconque des revendications précédentes, dans lequel la cage d'écureuil (10) est dépourvue de frette autour d'un ou de chacun parmi le premier anneau (16A) et le deuxième anneau (16B).

9. Rotor (4) selon l'une quelconque des revendications précédentes, dans lequel un tronçon intermédiaire (22) d'au moins une ou de chaque barre (18) possède une section transversale ayant une première portion de profil (30) et une deuxième portion de profil (32) différentes, la deuxième portion de profil (32) étant plus éloignée de l'axe de rotor (A) que la première portion de profil (30).

10. Rotor (4) selon la revendication 9, dans lequel un ou chacun parmi un premier tronçon d'extrémité (20A) et un deuxième tronçon d'extrémité (20B) d'au moins une ou chaque barre (18) présente à sa jonction avec le premier anneau (16A) ou le deuxième anneau (16B) une section transversale correspondant à la première portion de profil (30).

11. Rotor (4) selon la revendication 9 ou la revendication 10, dans lequel la première portion de profil (30) est ronde et/ou la deuxième portion de profil (32) est en queue d'aronde.

12. Rotor (4) selon l'une quelconque des revendications précédentes, comprenant au moins un élément de retenue (26), chaque élément de retenue (24) étant associé à un parmi le premier anneau (16A) et le deuxième anneau (16B) et comprenant une bague de retenue (26) entourant ledit anneau associé et un support (28), de préférence en forme de disque, par l'intermédiaire duquel la bague de retenue (26) est montée sur l'arbre (6).

13. Rotor (4) selon la revendication 12, dans lequel la bague de retenue (26) de chaque élément de retenue (24) est réalisé en acier, le support (28) de chaque élément de retenue (24) est réalisé en acier et/ou la bague de retenue (26) et le support (28) de chaque élément de retenue (24) sont réalisés en une seule pièce de même matière.

14. Machine électrique asynchrone (2) comprenant un rotor (4) selon l'une quelconque des revendications précédentes.
